# EUROPÄISCHE PATENTANMELDUNG

(11) **EP 0 982 527 A1**
(43) Veröffentlichungstag der Anmeldung: **01.03.2000**
(21) Anmeldenummer: 98115883.5
(22) Anmeldetag: 22.08.1998
(51) Int. Cl.: F16N 13/02, F16N 7/38

(54) **Schmierstoffgeber**

(71) Anmelder: DE LIMON FLUHME GMBH, D-40227 Düsseldorf (DE)
(72) Erfinder: Morgenstern, Gerhard, Dipl.-Ing., 40822 Mettmann (DE); Follert, Wolfgang, 44229 Dortmund (DE)
(74) Vertreter: Stenger, Watzke & Ring Patentanwälte

(57) **Zusammenfassung**

Die Erfindung betrifft einen Schmierstoffgeber zum kontinuierlichen und automatischen Schmieren von Maschinenteilen, insbesondere Lagern, mit einem an die zu schmierende Maschine anschließbaren Gehäuse (1), in dem ein Schmierstoffreservoir (2) sowie eine einen angetriebenen Kolben (4b) umfassende Ausgabevorrichtung (3) zur dosierten Ausgabe des Schmierstoffs angeordnet sind. Um einen Schmierstoffgeber derart weiterzubilden, daß auch geringe Schmierstoffmengen mit hohen Drücken ausgegeben werden können, wird erfindungsgemäß vorgeschlagen, daß die Ausgabevorrichtung (3) als Differentialkolbenpumpe (4) ausgebildet ist.

## Beschreibung

Die Erfindung betrifft einen Schmierstoffgeber zum kontinuierlichen und automatischen Schmieren von Maschinenteilen, insbesondere Lagern, mit einem an die zu schmierende Maschine anschließbaren Gehäuse, in dem ein Schmierstoffreservoir sowie eine einen angetriebenen Kolben umfassende Ausgabevorrichtung zur dosierten Ausgabe des Schmierstoffs angeordnet sind.

Schmierstoffgeber der eingangs genannten Art sind in einer Vielzahl von Ausführungsformen aus dem Stand der Technik bekannt. Die DE-A1-195 44 692 offenbart beispielsweise einen Schmierstoffgeber mit elektromotorisch gesteuerter Abgabe des Schmierstoffs. Diese Schmierstoffgeber dienen dazu, Maschinen oder Anlagenteile zu schmieren, die schwer zugänglich oder weit entfernt sind oder aber zu deren Schmierung die zu schmierende Maschine gestoppt werden müßte. Um eine kontinuierliche Schmierung dieser Maschinen und Anlagenteile zu ermöglichen, werden die gattungsgemäßen Schmierstoffgeber an die zu schmierenden Maschinen angeschlossen. Über einen Gaserzeuger oder einen elektromotorischen Antrieb wird dann kontinuierlich aus dem Schmierstoffreservoir Schmierstoff dosiert an die Maschine abgegeben. Je nach eingestellter Abgabemenge kann das Schmierstoffreservoir eines Schmierstoffgebers beispielsweise eine kontinuierliche Schmierung für bis zu ein Jahr garantieren. Bei dem aus der DE-A1-195 44 692 bekannten Schmierstoffgeber wirkt der elektromotorische Antrieb über ein Untersetzungsgetriebe und ein Schubgetriebe auf einen in dem Gehäuse des Schmierstoffgebers angeordneten Stellkolben, über den der unterhalb des Stellkolbens angeordnete Schmierstoff aus dem Gehäuse herausgedrückt wird. Diese bekannten Schmierstoffgeber arbeiten mit Ausgabedrücken von etwa 5 bar und Fördermengen von minimal 100 mm³ pro Kolbenhub. Aufgrund des niedrigen Ausgabedrucks von etwa 5 bar ist ein solcher Schmierstoffgeber nicht dazu geeignet, mit einem Schmierstoffverteiler verbunden zu werden, um mehr als ein Schmierstelle mit Schmierstoff zu versorgen. Darüber hinaus sind die minimalen Fördermengen von 100 mm³ pro Kolbenhub für viele Anwendungsfälle zu groß.

Davon ausgehend liegt der Erfindung die **Aufgabe** zugrunde, einen Schmierstoffgeber der eingangs genannten Art derart zu verbessern, daß er einfach aufgebaut zur Erzeugung hoher Ausgabedrücke und geringer Ausgabemengen geeignet ist.

Die **Lösung** dieser Aufgabenstellung ist erfindungsgemäß dadurch gekennzeichnet, daß die Ausgabevorrichtung als Differentialkolbenpumpe ausgebildet ist.

Durch die Verwendung einer direkt angetriebenen Differentialkolbenpumpe ist es möglich, auch geringe Fördermengen, das heißt weniger als 100 mm³ pro Kolbenhub zu fördern, da der Kolbenhub einer direkt angetriebenen Differentialkolbenpumpe sehr genau steuerbar ist. Darüber hinaus ermöglichen die unterschiedlichen Kolbenflächen auf der Saugseite und der Druckseite des Kolbens die Erzeugung von Ausgabedrücken, die oberhalb von 5 bar und insbesondere auch oberhalb von 10 bar liegen.

Gemäß einer ersten Ausführungsform der Erfindung dient als Antrieb für die Differentialkolbenpumpe ein von einem Gaserzeuger produziertes Gas, das über ein Ventil, vorzugsweise ein Mikroventil, der Differentialkolbenpumpe zuführbar ist. Bei dieser Antriebsart läuft in dem Gaserzeuger entweder eine mit einer starken Gasentwicklung verbundene chemische Reaktion ab oder es wird ein komprimiertes Gas verwendet. Zur Steuerung der Differentialkolbenpumpe ist zwischen den Gaserzeuger und die Pumpe ein Ventil geschaltet. Dieses Ventil kann beispielsweise als Mehrwegventil, insbesondere 3/2- oder 4/2-Wegeventil ausgebildet sein.

Gemäß einer zweiten Ausführungsform der Erfindung dient als Antrieb für die Differentialkolbenpumpe ein direkter elektromotorischer Antrieb. Bei dieser Antriebsart ist der Kolben der Differentialkolbenpumpe über eine Kolbenstange mit dem elektromotorischen Antrieb verbunden, so daß der Kolben direkt über die Kolbenstange auf und ab bewegbar ist.

Um eine variablen Betrieb der Ausgabevorrichtung bewerkstelligen zu können, das heißt die Ausgabevorrichtungen auf andere Ausgabemengen und/oder einen anderen Ausgabetakt einstellen zu können, ist der Antrieb der Ausgabevorrichtung mit einer Steuerungs- und Kontrolleinrichtung verbunden.

Der Ansaugdruck, der notwendig ist, um den Schmierstoff aus dem Schmierstoffreservoir über eine an die Differentialkolbenpumpe angeschlossene Saugleitung anzusaugen, kann dadurch verringert werden, daß das Schmierstoffreservoir über eine Druckfeder mit Druck beaufschlagt ist und somit der in dem Schmierstoffreservoir befindliche Schmierstoff unter Druck steht.

Zur Weiterleitung des über die Differentialkolbenpumpe ausgegebenen Schmierstoffs an die zu schmierenden Anlagenteile ist die Differentialkolbenpumpe über eine Ausgabeleitung mit einem Schmierstoffverteiler, insbesondere einen Progressivverteiler verbunden. Durch die Verwendung der Differentialkolbenpumpe ist es möglich, auch Ausgabedrücke von über 10 bar zu erzielen, so daß unter gleichzeitiger Verwendung eines Progessivverteilers über nur eine Differentialkolbenpumpe bis zu acht oder mehr Schmierstellen gleichzeitig oder nacheinander mit Schmierstoff versorgt werden können.

Schließlich wird mit der Erfindung vorgeschlagen, daß in der Ausgabeleitung zum Schmierstoffverteiler Rückschlagventile angeordnet sind. Dieses Rückschlagventil dient dazu, sicherzustellen, daß beim Saugbetrieb der Differentialkolbenpumpe kein Schmierstoff aus der Ausgabeleitung und dem Schmierstoffverteiler angesaugt wird.

Weitere Merkmale und Vorteile der Erfindung ergeben sich aus der nachfolgenden Beschreibung der zugehörigen Zeichnung, in der zwei Ausführungsformen eines erfindungsgemäßen Schmierstoffgebers dargestellt sind. In der Zeichnung zeigt:
- Fig. 1: eine schematische Darstellung eines Schmierstoffgebers mit einer über einen Gaserzeuger angetriebenen Differentialkolbenpumpe und
- Fig. 2: eine zweite Ausführungsform eines erfindungsgemäßen Schmierstoffgebers, bei dem die Differentialkolbenpumpe über einen direkten elektromotorischen Antrieb betätigt wird.

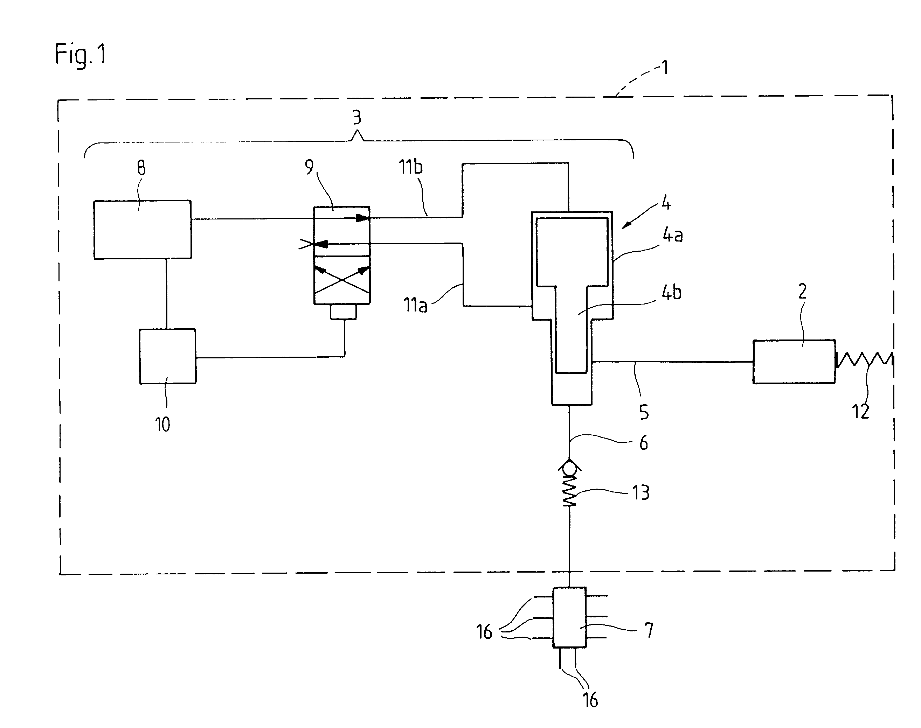

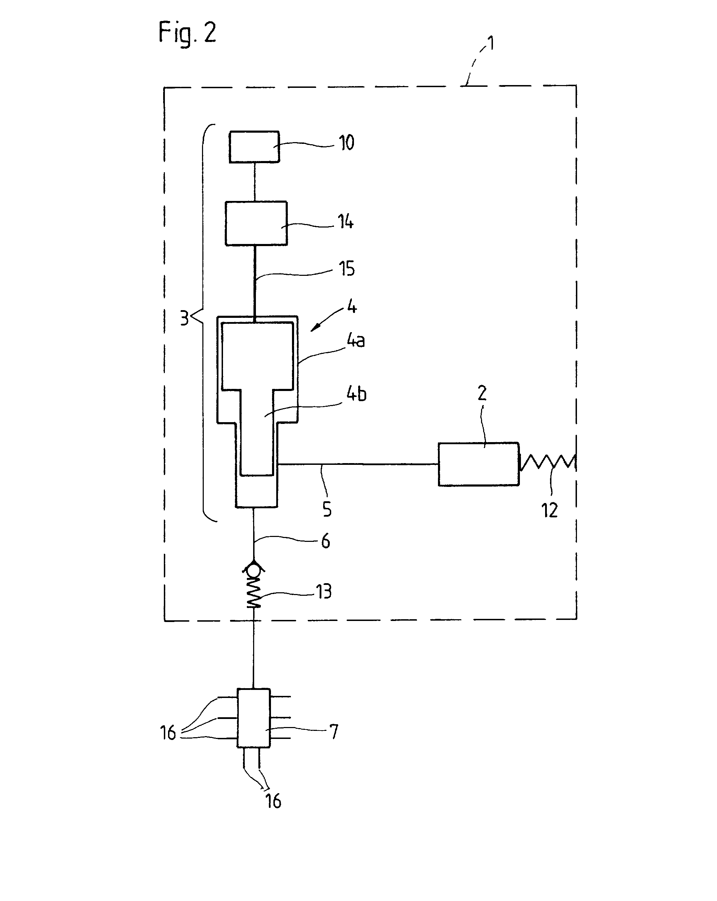

Die in den Abbildungen 1 und 2 dargestellten Schmierstoffgeber bestehen im wesentlichen aus einem in einem gestrichelt dargestellten Gehäuse 1 angeordneten Schmierstoffreservoir 2 sowie einer Ausgabevorrichtung 3 zur Ausgabe des in dem Schmierstoffreservoir bevorrateten Schmierstoffs an eine nicht dargestellte Maschine. In beiden dargestellten Ausführungsbeispielen ist wesentlicher Bestandteil der Ausgabevorrichtung 3 ist eine Differentialkolbenpumpe 4 mit einem in einem Zylindergehäuse 4a axial beweglichen abgestuften Kolben 4b.

Zum Ansaugen und Ausgeben des in dem Schmierstoffreservoir 2 befindlichen Schmierstoffs über die Differentialkolbenpumpe 4 ist die Differentialkolbenpumpe 4 einerseits über eine Saugleitung 5 an das Schmierstoffreservoir 2 und andererseits über eine Ausgabeleitung 6 an einen Schmierstoffverteiler 7 angeschlossen. Bei nur einer Schmierstelle kann die Ausgabeleitung 6 auch direkt an die Maschine angeschlossen werden, deren Teile zu schmieren sind.

Bei der in Fig. 1 dargestellten ersten Ausführungsform eines Schmierstoffgebers dient als Antrieb für die Differentialkolbenpumpe 4 ein in einem Gaserzeuger 8 erzeugtes Gas. Die Gaserzeugung erfolgt hierbei durch eine in dem Gaserzeuger 8 ablaufende chemische Reaktion oder die Freigabe eines komprimierten Gases. Das in dem Gaserzeuger 8 erzeugte Gas wird über ein Ventil 9, im dargestellten Ausführungsbeispiel ein 4/2-Wegeventil, welches als Mikroventil ausgebildet ist, der Differentialkolbenpumpe 4 zugeleitet. Die Steuerung des Gaserzeugers 8 sowie des Ventils 9 erfolgt über eine Steuerungs- und Kontrolleinrichtung 10.

Der in Fig. 1 dargestellte Schmierstoffgeber arbeitet folgendermaßen:

Zum Ansaugen von Schmierstoff aus dem Schmierstoffreservoir 2 über die Saugleitung 5 wird die Differentialkolbenpumpe 4 über eine untere Druckmittelleitung 11a derart mit Gas aus dem Gaserzeuger 8 beaufschlagt, daß der abgestufte Kolben 4b nach oben gedrückt wird. Bei dieser Aufwärtsbewegung des Kolbens 4b wird Schmierstoff über die Saugleitung 5 aus dem Schmierstoffreservoir 2 in das Zylindergehäuse 4a der Differentialkolbenpumpe 4 angesaugt. Um den zum Ansaugen des Schmierstoffes notwendigen Druck reduzieren zu können, ist der vorzugsweise in einer auswechselbaren Kartusche befindliche Schmierstoff durch eine Druckfeder 12 mit Druck beaufschlagt.

Nach Beendigung des Saugvorgangs wird das Ventil 9 umgeschaltet und das Gas aus dem Gaserzeuger 8 über eine obere Druckmittelleitung 11b der Differentialkolbenpumpe 4 zugeleitet. Durch die Beaufschlagung der oberen Kolbenfläche des abgestuften Kolbens 4b bei gleichzeitiger Öffnung der unteren Druckmittelleitung 11a zurück zum Ventil 9, wird der Kolben 4b durch den Gasdruck nach unten bewegt und der in der vorhergehenden Saugphase angesaugte Schmierstoff über die Ausgabeleitung 6 hin zu dem Schmierstoffverteiler 7 aus dem Zylindergehäuse 4a der Differentialkolbenpumpe 4 herausgedrückt.

Wie aus den Abbildungen Fig. 1 und 2 ersichtlich ist, sind den Ausgabeleitungen 6 Rückschlagventile 13 angeordnet. Das Rückschlagventil 13 in der Ausgabeleitung 6 ist so angeordnet, daß es in der Saugphase der Differentialkolbenpumpe 4 verhindert, daß Schmierstoff aus der Ausgabeleitung 6 bzw. dem Schmierstoffverteiler 7 abgesaugt wird. In der Druckphase dagegen gibt das Rückschlagventil 13 in der Ausgabeleitung 6 den Weg für den Schmierstoff hin zum Schmierstoffverteiler 7 frei.

Die Schaltung des Ventils 9 sowie die Gaserzeugung des Gaserzeugers 8 wird über die Steuerungs- und Kontrolleinrichtung 10 gesteuert. Neben dieser reinen Betriebssteuerung dient die Steuerungs- und Kontrolleinrichtung 10 dazu, die Ausgabevorrichtung 3 auf verschiedene Schmierstoffprogramme umstellen zu können, das heißt die Ausgabemenge und/oder den Ausgabetakt des Schmierstoffs zu variieren.

Bei der in Fig. 2 dargestellten zweiten Ausführungsform dient als Antrieb für die Differentialkolbenpumpe 4 ein elektromotorischer Antrieb 14. Dieser elektromotorische Antrieb 14 ist über eine Kolbenstange 15 direkt mit dem abgestuften Kolben 4b der Differentialkolbenpumpe 4 verbunden. Die Arbeitsweise der Differentialkolbenpumpe 4 in der Saugphase und der Druckphase entspricht der zuvor zum ersten Ausführungsbeispiel beschriebenen Arbeitsweise.

Durch die Verwendung der Differentialkolbenpumpe 4 mit dem abgestuften Kolben 4b mit den unterschiedlichen Kolbenflächen ist es möglich, einen hohen Ausgabedruck zu erzeugen, mit dem der Schmierstoff über die Ausgabeleitung 6 dem Schmierstoffverteiler 7 zugeführt wird. Diese Drücke können über 10 bar betragen. Aufgrund dieser hohen Ausgabedrücke ist es möglich, den Schmierstoffverteiler 7 beispielsweise als Progressivverteiler auszubilden, so daß an einen Schmierstoffverteiler 7 eines Schmierstoffgebers mehrere Maschinen über Maschinenanschlußleitungen 16 anschließbar sind. Im dargestellten Fall ist es möglich, bis zu acht Maschinen an einen Schmierstoffverteiler 7 nur eines Schmierstoffgebers anzuschließen. Selbstverständlich ist es auch möglich, mehr als acht Maschinen gleichzeitig oder nacheinander über einen Schmierstoffverteilter 7 mit Schmierstoff zu versorgen.

Die beiden dargestellten Ausführungsbeispiele eines Schmierstoffgebers zeichnen sich dadurch aus, daß es durch die Verwendung der Differentialkolbenpumpe 4 als Herzstück der Ausgabevorrichtung 3 möglich ist, einerseits kleine Schmierstoffmengen von weniger als 100 mm³ pro Hub auszugeben und andererseits hohe Drücke von >5 bar und insbesondere >10 bar zu erzeugen. Aufgrund der gegenüber dem Stand der Technik größeren Einsatzbereiche dieser Schmierstoffgeber, die auch zur gleichzeitigen Schmierung mehrerer Maschinen verwendet werden können, weisen diese Schmierstoffgeber einen erheblichen Kostenvorteil gegenüber den Schmierstoffgebern des Standes der Technik auf.

### Bezugszeichenliste

- 1: Gehäuse
- 2: Schmierstoffreservoir
- 3: Ausgabevorrichtung
- 4: Differentialkolbenpumpe
- 4a: Zylindergehäuse
- 4b: Kolben
- 5: Saugleitung
- 6: Ausgabeleitung
- 7: Schmierstoffverteiler
- 8: Gaserzeuger
- 9: Ventil
- 10: Steuerungs- und Kontrolleinrichtung
- 11a: (untere) Druckmittelleitung
- 11b: (obere) Druckmittelleitung
- 12: Druckfeder
- 13: Rückschlagventil
- 14: elektromotorischer Antrieb
- 15: Kolbenstange
- 16: Maschinenanschlußleitung

## Patentansprüche

1. Schmierstoffgeber zum kontinuierlichen und automatischen Schmieren von Maschinenteilen, insbesondere Lagern, mit einem an die zu schmierende Maschine anschließbaren Gehäuse (1), in dem ein Schmierstoffreservoir (2) sowie eine einen angetriebenen Kolben (4b) umfassende Ausgabevorrichtung (3) zur dosierten Ausgabe des Schmierstoffs angeordnet sind,
**dadurch gekennzeichnet,**
daß die Ausgabevorrichtung (3) als Differentialkolbenpumpe (4) ausgebildet ist.

2. Schmierstoffgeber nach Anspruch 1, dadurch gekennzeichnet, daß als Antrieb für die Differentialkolbenpumpe (4) ein von einem Gaserzeuger (8) produziertes Gas dient, das über ein Ventil (9), vorzugsweise ein Mikroventil, der Differentialkolbenpumpe (4) zuführbar ist.

3. Schmierstoffgeber nach Anspruch 1, dadurch gekennzeichnet, daß als Antrieb für die Differentialkolbenpumpe (4) ein elektromotorischer Antrieb (14) dient.

4. Schmierstoffgeber nach mindestens einem der Ansprüche 1 bis 3, dadurch gekennzeichnet, daß der Antrieb der Ausgabevorrichtung (3) mit einer Steuerungs- und Kontrolleinrichtung (10) verbunden ist, über die der Betrieb der Ausgabevorrichtung (3) variabel einstellbar ist.

5. Schmierstoffgeber nach mindestens einem der Ansprüche 1 bis 4, dadurch gekennzeichnet, daß das mittels einer Druckfeder (12) in Ausgaberichtung mit Druck beaufschlagte Schmierstoffreservoir (2) über eine Saugleitung (5) an die Differentialkolbenpumpe (4) angeschlossen ist.

6. Schmierstoffgeber nach mindestens einem der Ansprüche 1 bis 5, dadurch gekennzeichnet, daß die Differentialkolbenpumpe (4) über eine Ausgabeleitung (6) mit einem Schmierstoffverteiler (7), insbesondere einem Progressivverteiler, verbunden ist.

7. Schmierstoffgeber nach Anspruch 5 oder 6, dadurch gekennzeichnet, daß in der Ausgabeleitung (6) zum Schmierstoffverteiler (7) ein Rückschlagventil (13) angeordnet ist.
